Europäisches Patentamt

**European Patent Office**

Office européen des brevets

(11) Veröffentlichungsnummer: **0 034 699**
**B1**

(12) **EUROPÄISCHE PATENTSCHRIFT**

(45) Veröffentlichungstag der Patentschrift:
**10.04.85**

(21) Anmeldenummer: **81100289.8**

(22) Anmeldetag: **16.01.81**

(51) Int. Cl.⁴: **F 24 D 11/02**, F 02 G 5/00,
F 24 J 3/00

(54) **Wärmepumpenanordnung.**

(30) Priorität: **23.02.80 DE 3006821**

(43) Veröffentlichungstag der Anmeldung:
**02.09.81 Patentblatt 81/35**

(45) Bekanntmachung des Hinweises auf die Patenterteilung:
**10.04.85 Patentblatt 85/15**

(84) Benannte Vertragsstaaten:
**BE FR GB IT NL SE**

(56) Entgegenhaltungen:
**DE - A - 2 620 236**
**DE - A - 2 626 574**
**DE - A - 2 728 273**
**DE - B - 1 183 741**
**US - A - 3 198 176**

**Die Akte enthält technische Angaben, die nach dem Eingang der Anmeldung eingereicht wurden und die nicht in dieser Patentschrift enthalten sind.**

(73) Patentinhaber: **Pischinger, Franz, Prof. Dr. techn., Im Erkfeld 4, D-5100 Aachen (DE)**

(72) Erfinder: **Pischinger, Franz, Prof. Dr. techn., Im Erkfeld 4, D-5100 Aachen (DE)**

(74) Vertreter: **Fischer, Friedrich B., Dr.-Ing., c/o Klöckner-Humboldt-Deutz AG Patentabteilung-AE-ZP Deutz-Mülheimer-Strasse 111, D-5000 Köln80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Wärmepumpenanordnung, bestehend aus einer Brennkraftmaschine, die über eine Kupplung einen in einem Kältemittelkreislauf angeordneten Verdichter antreibt, aus einem Heizkreisvorlauf, der mit dem Kältemittelkreislauf über einen Kondensator in Verbindung steht und weiterhin zum Kühlen der Brennkraftmaschine und deren Abgase dient, und aus einem von der Brennkraftmaschine antreibbaren Bremsaggregat, das in dem Heizkreisvorlauf angeordnet ist.

Wärmepumpenanordnungen, die mit von Brennkraftmaschinen angetriebenen Verdichtern arbeiten, sind allgemein bekannt. Wird bei derartigen Anlagen als Wärmequelle Aussen- oder Umgebungsluft genutzt, so kann der gesamte Heizbedarf, beispielsweise eines Hauses, auch bei sehr tiefen Temperaturen der Aussenluft, z.B. −15°C, nur dann gedeckt werden, wenn der Kältemittelverdichter auf die tiefste Aussenlufttemperatur ausgelegt ist. Dies hat zur Folge, dass in zeitlich häufigen Temperaturbereichen die Leistung des Verdichters zu hoch ist, so dass selbst bei einem Absinken der Betriebsdrehzahl des Verdichters bei höheren Aussentemperaturen eine Zweipunkt-Regelung einsetzen muss, um den Verdichter mit der geringeren notwendigen Leistung zu fahren. Eine Zweipunkt-Regelung verursacht jedoch Stillstand- und Anfahrverluste und verringert zudem die Lebensdauer des Verdichters und der Brennkraftmaschine.

Zweckmässigerweise ist daher der Kältemittelverdichter leistungsmässig auf den zeitlich häufigsten Temperaturbereich auszulegen. Hierzu ist es dann erforderlich, dass bei sehr tiefen Aussentemperaturen eine zusätzliche Heizeinrichtung installiert werden muss. Eine solche Anlage erfordert jedoch einen erheblichen zusätzlichen Investitionsaufwand für ein System, welches während ca. 80% der Heizperiode ungenutzt bleibt.

Aus der DE-A-2 728 273 ist eine Wärmepumpenanordnung der eingangs genannten Gattung bekannt, bei der die Verdichtergrösse auf den zeitlich häufigsten jährlichen Betriebsbereich ausgelegt ist und die Verlustwärme der Brennkraftmaschine dem Heizkreisvorlauf zugeführt wird. Bei tiefen Aussentemperaturen ist ein zusätzliches Aggregat, nämlich eine Strömungsbremse oder ein mit Heizwiderständen belastbarer Generator, zuschaltbar, um die Brennkraftmaschine zu belasten. Dadurch wird erreicht, dass der Motor eine höhere Verlustleistung aufweist, die an den Heizkreisvorlauf abgeführt werden kann, und dass die Strömungsbremse bzw. die Heizwiderstände zusätzliche Wärmequellen zum Heizen des Heizkreisvorlaufes bilden.

Als Nachteil dieser bekannten Wärmepumpenanordnung müssen allerdings die mechanischen Empfindlichkeiten der Strömungsbremse sowie der die Strömungsbremse mit der Brennkraftmaschine verbindenden Kupplungselemente und zusätzlich die Abhängigkeit des Betriebsverhaltens von den Eigenschaften des in einem Nutzkreislauf eingesetzten Fluids in Kauf genommen werden. Daneben ist eine regelbare zusätzliche Belastung der Brennkraftmaschine und somit eine jeweils an die Erfordernisse des Verbrauchers anpassbare Abwärmeerzeugung der Brennkraftmaschine nur mit sehr kostenintensiven zusätzlichen Regelsystemen erreichbar. Auch die Verwendung eines durch Widerstände belasteten Generators erfordert aufwendige Schalteinrichtungen (Schütze) im elektrischen Leistungskreis für eine stufenweise oder auch stufenlose Regelung der Belastung der Brennkraftmaschine. Des weiteren kann auch der hierbei erreichte Gesamtwirkungsgrad aufgrund der Vielzahl von mit Wärmeverlusten behafteten Wärmetauschern nicht überzeugen.

Aufgabe der vorliegenden Erfindung ist es deshalb, eine Wärmepumpenanordnung der eingangs genannten Art vorzuschlagen, die mit geringem technischen Aufwand eine gute Regelbarkeit aufweist und daneben mit einem optimalen Gesamtwirkungsgrad arbeitet.

Diese Aufgabe wird erfindungsgemäss durch die kennzeichnenden Merkmale des Patentanspruches 1 gelöst. Das somit als Wirbelstrombremse ausgebildete Bremsaggregat hat den grundsätzlichen Vorteil, dass durch eine einfache Regelung des Erregerstroms die gewünschte Bremsleistung eingestellt werden kann. Eine Wirbelstrombremse arbeitet zudem ohne mechanische Stellglieder völlig verschleiss- und wartungsfrei. Ausserdem wird das zur Wärmeabfuhr verwendete Fluid nicht strömungsmechanisch belastet.

Aus der US-A-3 198 176 ist es zwar grundsätzlich bekannt, eine Wirbelstrombremse zur Aufheizung eines Wärmeträgermediums zu verwenden, jedoch ist bei der hier offenbarten Anordnung die Wirbelstrombremse derart vorgesehen, dass grundsätzlich nur das gesamte in einem Vorratsbehälter eingefüllte Wärmeträgermedium aufgeheizt werden kann, so dass die insbesondere in Wärmepumpenanordnungen geforderte regelbare Aufheizung bei einem optimierten Gesamtwirkungsgrad nahezu unmöglich ist.

Durch die bei der erfindungsgemässen Wärmepumpenanordnung im Stator der Wirbelstrombremse vorgesehenen Kühlmittelkanäle, die direkt an den Heizkreislaufvorlauf angeschlossen sind, der Wärmeverlust der Gesamtanordnung aufgrund eingesparter separater Wärmetauscher bzw. eines eingesparten besonderen Heizkreislaufes für die Wirbelstrombremse erheblich verringert werden.

Durch die Anordnung des Polrades der Wirbelstrombremse auf der Kurbelwelle der Brennkraftmaschine ist die Wirbelstrombremse ohne besondere Dichtelemente, Lagerungen für das Polrad und ohne Zwischenschaltung einer Kupplung angetrieben. Dadurch kann die Wirbelstrombremse bei Nichteinschaltung der Erregung, d.h. also in Betriebszuständen, in denen die Wirbelstrombremse kein Bremsmoment erzeugt, nahezu verlustlos von der Brennkraftmaschine angetrieben werden. Daneben wird die Gesamtanordnung hierdurch preisgünstiger und aufgrund eingesparter verschleissanfälliger Einzelelemente hinsichtlich ihrer Standzeit verbessert.

Da die Erregung der Wirbelstrombremse von einer netzgespeisten Regeleinrichtung regelbar ist, kann für eine derartige Regeleinrichtung ein handelsüblicher, witterungsgeführter Vorlauftemperaturregler benutzt werden. Dieser Regler kann über ein geeignetes handelsübliches Stellglied den Erregerstrom regeln. Damit ist es möglich, zur Steuerung der zusätzlichen Heizeinrichtung auf bewährte, handelsübliche Bauteile zurückzugreifen. In diesem Regler können in an sich bekannter Weise auch als Eingangsgrösse die Aussentemperatur, die Heizkreisvorlauftemperatur sowie die Temperatur des zu beheizenden Raumes, Gebäudes etc. vorgegeben werden. Damit erfüllt ein einziger Regler die gesamten anfallenden Regelfunktionen.

Wird die Wirbelstrombremse in einem separaten Gehäuse angeordnet, welches an das Gehäuse der Brennkraftmaschine angeflanscht ist, so erhält man eine sehr kompakte und reparaturfreundliche Anordnung. Daneben bietet diese Ausführungsform den Vorteil, dass das Kurbelgehäuse der Brennkraftmaschine nicht verändert werden muss.

Wird die Brennkraftmaschine mit einem Alldrehzahlregler ausgerüstet, so kann dieser ebenfalls von der Regeleinrichtung gesteuert werden, so dass eine vollautomatische Regelung in Abhängigkeit der Aussentemperatur oder der Heizkreisvorlauftemperatur sowie der Raumtemperatur erhalten wird.

Im folgenden wird die Erfindung anhand eines bevorzugten Ausführungsbeispiels näher erläutert.

Es stellen dar:

Fig. 1 eine Schemaskizze eines Wärmepumpensystems gemäss der Erfindung;

Fig. 2 ein Querschnitt durch die Brennkraftmaschine mit angeflanschter Wirbelstrombremse und Verdichter.

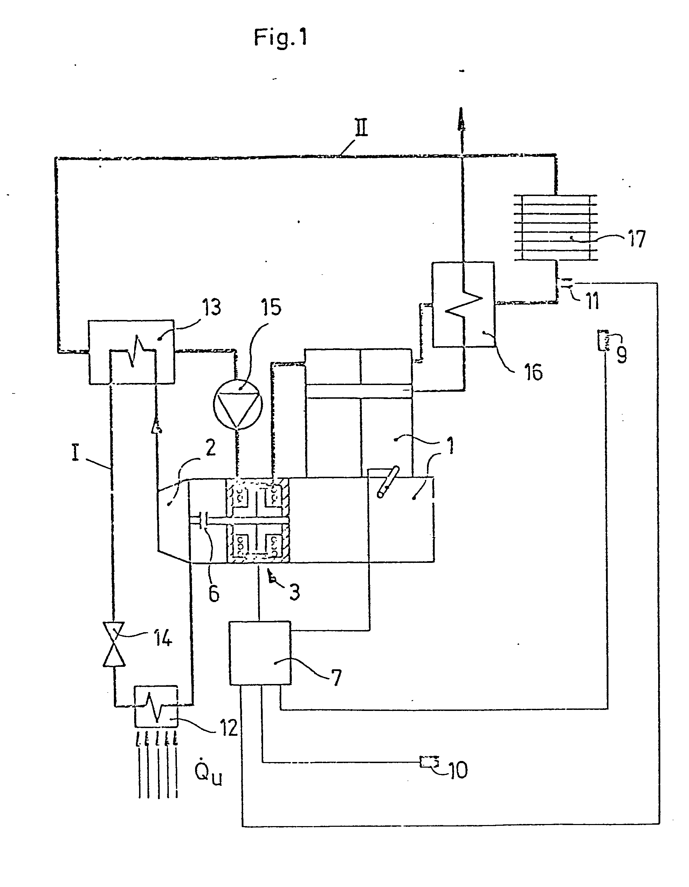

In Fig. 1 ist mit 1 eine Brennkraftmaschine, mit 2 ein Verdichter und mit 3 eine Wirbelstrombremse bezeichnet. Die Wirbelstrombremse ist ohne Zwischenschaltung einer Kupplung direkt mit der Brennkraftmaschine 1 verbunden, wohingegen der Verdichter 2 über eine Schaltkupplung 6 antreibbar ist.

Der Verdichter 2 ist in einem an sich bekannten Kältemittelkreislauf I angeordnet. Der Kältemittelkreislauf besteht aus einem Kondensator 13, einem Drosselventil 14 und einem Verdampfer 12. In dem Verdampfer 12 wird in an sich bekannter Weise z.B. der Umgebung oder dem Grundwasser Wärme entzogen und an das zunächst flüssige Kältemittel abgegeben. Das verdampfte Kältemittel wird im Verdichter 2 komprimiert. In dem Kondensator 13 gibt das Kältemittel die von der Umgebung aufgenommene Wärme vermehrt um die vom Verdichter zugeführte Energie an den Heizkreislauf II ab. Dabei geht das Kältemittel wieder in die flüssige Phase über. Durch Entspannung im Drosselventil 14 wird das Kältemittel auf den Ausgangszustand vor dem Verdampfer zurückgeführt.

In dem Heizkreisvorlauf II wird als Wärmeträger üblicherweise Wasser benutzt. Dies wird von einer Umwälzpumpe 15 durch in der Wirbelstrombremse 3 angeordnete Kühlkanäle, von dort zum Kühlen der Brennkraftmaschine 1 weiter zu einem Abgaswärmetauscher 16 und sodann zu den Radiatoren 17 (Heizkörpern) geführt und gelangt von dort über den Kondensator 13, von wo es Wärme aus dem Kältemittelkreislauf I aufnimmt, wieder zurück zur Umwälzpumpe 15. Die Erregung der Wirbelstrombremse 3, die Drehzahl- und Lasteinstellung der Brennkraftmaschine 1, sowie die Stellung eines evtl. in den Heizkreisvorlauf II eingeschalteten Vierwegeventils wird von einer Regeleinrichtung 7 übernommen. Als Regelgrösse dient die Raumtemperatur, die über einen Messfühler 9 erfasst wird. Als Störgrössen treten in diesem Regelkreis die Aussentemperatur und die Heizkreisvorlauftemperatur auf. Sie werden mit dem Temperaturfühler 10, 11 erfasst.

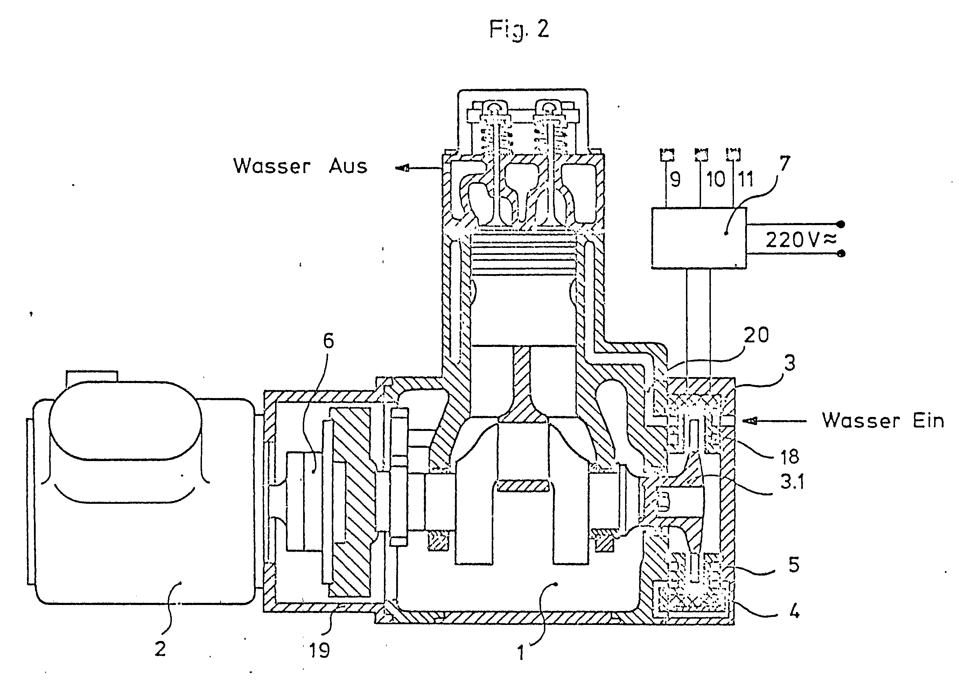

In Fig. 2 ist ein detaillierter Aufbau der Brennkraftmaschine mit integrierter Wirbelstrombremse 3 und des Verdichters 2 dargestellt. Der Verdichter 2 ist – wie oben schon erwähnt – über eine im Gehäuse 19 angeordnete schaltbare Kupplung 6 mit der Brennkraftmaschine 1 verbunden. Die Wirbelstrombremse 3 ist an dem anderen freien Wellenende der Brennkraftmaschine angeordnet. Hierbei kann das Polrad 3.1 der Wirbelstrombremse 3 direkt an dem freien Wellenende der Brennkraftmaschine 1 befestigt werden, so dass eine zusätzliche Lagerung entfällt, wodurch ein praktisch verschleissfester Betrieb möglich ist. Das Polrad 3.1 dreht sich in einem Luftspalt eines durch eine Spule 4 magnetisierbaren Stators 5, der mit Kühlkanälen 18 versehen ist, die direkt von dem Wärmeträger des Heizkreislaufs II durchflossen werden. Über den Kanal 20 sind die Kühlkanäle des Stators unmittelbar an das Kühlsystem des Motors angebunden.

Die beschriebene Wärmepumpe ist derart ausgelegt, dass bei max. Drehzahl der Brennkraftmaschine der geforderte Wärmebedarf oberhalb etwa −4°C Aussentemperatur alleine mit der Kondensator- und Brennkraftmaschinenabwärme bedeckt werden kann. Im Bereich höherer Aussentemperaturen wird die Heizleistung an den Wärmebedarf durch Verstellen der Last und der Drehzahl der Brennkraftmaschine angepasst. Bei höheren Aussentemperaturen ist eine Anpassung der Heizleistung durch einen Taktbetrieb (Ein-Aus) vorgesehen.

Bei Aussentemperaturen unter dem Gleichgewichtspunkt von −4°C wird der Motor immer mit Nenndrehzahl betrieben und gleichzeitig zusätzlich durch die Wirbelstrombremse 3 belastet. Über die Regeleinrichtung 7 wird die Höhe des Erregerstroms und damit die Grösse des Bremsmomentes eingestellt, wobei gleichzeitig die Konstanthaltung der Motordrehzahl durch die Regelung der Einspritzmenge über den Alldrehzahlregler der Einspritzpumpe erfolgt.

Die erfindungsgemässe Anordnung gestattet daneben auch einen Heizungsnotbetrieb bei Ausfall des Kältemittelkreislaufs I. Hierzu wird der Verdichter über die Kupplung 6 abgeschaltet und dem Heizkreislauf II nur über die Wirbelstrombremse und die Motorabwärme Wärme zugeführt. Bei entsprechender Auslegung der Wirbelstrombremse kann bei Vollast der Brennkraftmaschine bis zu 90% der Brennstoffenergie in Heizwärme umgesetzt werden.

**Patentansprüche**

1. Wärmepumpenanordnung, bestehend aus einer Brennkraftmaschine (1), die über eine Kupplung (6) einen in einem Kältemittelkreislauf angeordneten Verdichter (2) antreibt, aus einem Heizkreisvorlauf (II), der mit dem Kältemittelkreislauf über einen Kondensator (13) in Verbindung steht und weiterhin zum Kühlen der Brennkraftmaschine (1) und deren Abgase dient, und aus einem von der Brennkraftmaschine (1) antreibbaren Bremsaggregat (3), das in dem Heizkreisvorlauf (II) angeordnet ist, gekennzeichnet durch die Kombination folgender Merkmale:

a) das Bremsaggregat ist als eine Wirbelstrombremse (3) ausgebildet;

b) der Stator (5) der Wirbelstrombremse weist Kühlmittelkanäle (18) auf, die direkt an den Heizkreisvorlauf (II) angeschlossen sind;

c) die Kühlmittelkanäle (18) sind durch im Gehäuse der Brennkraftmaschine (1) integrierte Kanäle (20) mit dem Kühlkreislauf der Brennkraftmaschine (1) verbunden;

d) das Polrad (3.1) der Wirbelstrombremse (3) ist auf der Kurbelwelle der Brennkraftmaschine (1) angeordnet;

e) die Erregung der Wirbelstrombremse (3) ist von einer netzgespeisten Regeleinrichtung (7) regelbar.

2. Wärmepumpenanordnung nach Anspruch 1, dadurch gekennzeichnet, dass die Wirbelstrombremse (3) in einem separaten Gehäuse angeordnet ist, welches an das Gehäuse der Brennkraftmaschine (1) angeflanscht ist.

3. Wärmepumpenanordnung nach einem der vorangegangenen Ansprüche, dadurch gekennzeichnet, dass als Einganggrösse der Regeleinrichtung (7) die Aussentemperatur, die Heizkreisvorlauftemperatur sowie die Temperatur des zu beheizenden Raumes, Gebäudes, etc. vorgesehen ist.

4. Wärmepumpenanordnung nach einem der vorangegangenen Ansprüche, dadurch gekennzeichnet, dass die Brennkraftmaschine (1) mit einem Alldrehzahlregler ausgerüstet ist, der von der Regeleinrichtung (7) verstellbar ist.

**Claims**

1. A heat pump arrangement comprising: an internal combustion engine (1) for driving through a clutch (6) a compressor (2) connected to a cooling-medium circuit; a heating circuit spur (11) communicating through a condenser (13) with the cooling-medium circuit and also serving to cool the internal combustion engine (1) and the exhaust gases thereof; and a brake (3) arranged to be driven by the internal combustion engine (1) and connected to the heating circuit spur (11), characterized by a combination of the following features:

a) the brake is an eddy-current brake (3);

b) the stator (5) of the eddy-current brake is provided with cooling-medium ducts (18) connected directly to the heating circuit spur (11);

c) the cooling-medium ducts (18) are connected by further ducts (20), which are integral with the casing of the internal combustion engine (1), to the cooling circuit of the internal combustion engine (1);

d) the magnet wheel (3.1) of the eddy-current brake (3) is mounted on the crankshaft of the internal combustion engine (1);

e) the energization of the eddy-current brake (3) is controllable by a mains-powered control device (7).

2. A heat pump arrangement according to claim 1, characterized in that the eddy-current brake (3) is disposed in a separate casing flangedly joined to that of the internal combustion engine (1).

3. A heat pump arrangement according to any of the preceding claims, characterized in that the ambient temperature, the temperature of the heating circuit spur and the temperature of the room or building or the like to be heated are used as input variables of the control device (7).

4. A heat pump arrangement according to any of the preceding claims, characterized in that the internal combustion engine (1) is provided with a universal speed governor arranged to be adjusted by the control device (7).

**Revendications**

1. Arrangement d'une pompe à chaleur consistant en un moteur à combustion interne (1) qui, par l'intermédiaire d'un embrayage (6) entraîne un compresseur (2) disposé dans un circuit de fluide de refroidissement, en un recyclage d'alimentation (II) de circuit de chauffage qui est en communication avec le circuit de fluide de refroidissement par l'intermédiaire d'un condenseur (13) et qui sert, en outre, à refroidir le moteur à combustion interne (1) et ses gaz d'échappement, et en un groupe de freinage (3) susceptible d'être entraîné par le moteur à combustion interne (1) et qui est disposé sur le recyclage d'alimentation (II) du circuit de chauffage, arrangement caractérisé par la combinaison des caractéristiques suivantes:

a) le groupe de freinage est réalisé sous la forme d'un frein à courants de Foucault (3),

b) le stator du frein à courants de Foucault comporte des canaux (18) de fluide de refroidissement qui sont directement raccordés au recyclage d'alimentation (II) du circuit de chauffage,

c) les canaux (18) de fluide de refroidissement sont reliés au circuit de fluide de refroidissement du moteur à combustion interne (1) par des canaux (20) intégrés dans le carter du moteur à combustion interne (1),

d) la roue polaire (3.1) du frein à courants de Foucault (3) est disposée sur l'arbre de vilebrequin du moteur à combustion interne (1),

e) l'excitation du frein à courants de Foucault (3) est susceptible d'être réglée par un dispositif de régulation alimenté par le réseau (7).

2. Arrangement de pompe à chaleur selon la revendication 1, caractérisé en ce que le frein à courants de Foucault (3) est disposé dans un boîtier séparé qui est bridé sur le carter du moteur à combustion interne (1).

3. Arrangement de pompe à chaleur selon une des précédentes revendications, caractérisé en ce que, comme grandeurs d'entrée du dispositif de régulation (7) il est prévu la température extérieure, la température du recyclage d'alimentation du circuit de chauffage, ainsi que la température du local, du bâtiment etc..., à chauffer.

4. Arrangement de pompe à chaleur selon une des précédentes revendications, caractérisé en ce que le moteur à combustion interne (1) est équipé d'un régulateur pour toutes vitesses qui est susceptible d'être réglé à partir du dispositif de régulation (7).

# Fig.1

Fig. 2

Wasser Aus

220 V≈

Wasser Ein